# EUROPEAN PATENT APPLICATION

(11) **EP 4 737 019 A1**
(43) Date of publication of application: **06.05.2026**
(21) Application number: 25213067.9
(22) Date of filing: 03.11.2025
(51) Int. Cl.: B06B 1/00, H04R 19/02

(54) **VEHICLE AUDIO SYSTEM**

(30) Priority: 01.11.2024 GB 202416146
(71) Applicant: Jaguar Land Rover Limited, Coventry, Warwickshire CV3 4LF (GB)
(72) Inventor: Wiles, Paul, Coventry, CV3 4LF (GB); Soar, Sam, Coventry, CV3 4LF (GB)
(74) Representative: Jaguar Land Rover Patents Department

(57) **Abstract**

Aspects of the present invention relate to an audio system (210) comprising: at least one audio speaker (325) for converting a speaker audio signal (320) to sound waves; at least one haptic transducer (525) for generating a vibration according to a haptic signal (520); at least one electrostatic panel loudspeaker (425) for converting a panel audio signal (420) to sound waves; a control system (220) in communication with the at least one audio speaker, the at least one haptic transducer and the at least one electrostatic panel loudspeaker, and configured to cause the at least one audio speaker to convert the speaker audio signal to sound waves, to cause the at least one haptic transducer to vibrate according to the haptic signal and cause the at least one electrostatic panel loudspeaker to convert the panel audio signal to sound waves.

## Description

### TECHNICAL FIELD

The present disclosure relates to a vehicle audio system. Aspects of the invention relate to an audio system, to a vehicle audio system, and to a vehicle

### BACKGROUND

It is known to provide audio systems comprising traditional loudspeakers and to provide audio systems using electrostatic panel loudspeakers.

It is an aim of the present invention to provide an audio system comprising a mixture of audio speaker types that provides a cohesive and clean audio experience to the user.

### SUMMARY OF THE INVENTION

Aspects and embodiments of the invention provide an audio system, a vehicle audio system, and a vehicle as claimed in the appended claims.

According to an aspect of the present invention there is provided an audio system comprising: at least one audio speaker for converting a speaker audio signal to sound waves; at least one haptic transducer for generating a vibration according to a haptic signal; at least one electrostatic panel loudspeaker for converting a panel audio signal to sound waves; a control system in communication with the at least one audio speaker, the at least one haptic transducer and the at least one electrostatic panel loudspeaker, and configured to cause the at least one audio speaker to convert the speaker audio signal to sound waves, to cause the at least one haptic transducer to vibrate according to the haptic signal and cause the at least one electrostatic panel loudspeaker to convert the panel audio signal to sound waves.

The present invention provides an audio system that combines at least one traditional audio speaker with at least one electrostatic panel loudspeaker. Electrostatic panel loudspeakers are slimmer than traditional audio speakers and so the present audio system can realise a space saving compared to an audio system comprised solely of traditional audio speakers. The use of at least one haptic transducer provides an additional benefit in providing an audio system with a good bass performance. In one configuration the at least one audio speaker may be a speaker that is configured to provide bass frequencies whereas the at least one electrostatic panel loudspeaker may be configured to provide higher audio frequencies. The at least one haptic transducer may then be configured to supplement the performance of the audio system in the cross-over point between the at least one audio speaker and the at least one electrostatic panel loudspeaker.

Optionally, the at least one audio speaker may comprise a woofer speaker or a sub-woofer speaker.

Optionally, the panel audio signal may comprise a frequency range from 125Hz to 50kHz, the speaker audio signal may comprise a frequency range up to 120Hz and the haptic signal may comprise the frequency range 20 Hz to 300 Hz. For sub-woofer speakers the audio signal may have a frequency range of up to 80Hz. For woofer speakers the audio signal may be in the range 60-120 Hz.

The control system may be configured to reduce power to the at least one audio speaker and increase power to the at least one haptic transducer in order to mitigate the effects of distortion in the output from the at least one audio speaker. The control system may be configured to detect distortion in the audio speaker or may alternatively be configured with the power/drive performance limits of the audio speakers and may be further configured to optimise the bass in an audio signal between the audio and haptic outputs accordingly.

According to another aspect of the present invention there is provided a vehicle audio system for outputting audio to an interior compartment of a vehicle comprising an audio system according to the above aspect of the present invention.

The vehicle audio system within the vehicle may at least one vehicle seat comprising a headrest portion, wherein the at least one electrostatic loudspeaker comprises a headrest electrostatic loudspeaker unit disposed in the headrest portion. Different configurations may be used to deploy the headrest electrostatic loudspeaker unit. For example, the unit may comprise a pair of panels in the headrest either side of the occupant's head or alternatively the unit may comprise a wraparound electrostatic panel loudspeaker. The vehicle audio system may comprise a plurality of vehicle seats, each vehicle seat comprising a headrest portion wherein each headrest portion comprises an electrostatic loudspeaker unit. The electrostatic loudspeaker units within the plurality of seats may all be of the same configuration (e.g. they may all be wraparound style panels) or there may be different configurations within the vehicle cabin (e.g. the front seats may be of the wraparound style and the rear seats may comprise a pair of panels).

Optionally, the at least one haptic transducer may comprise a plurality of haptic transducers disposed in a footrest or floor portion of the vehicle and disposed in vehicle seats.

At least one vehicle seat may comprise a backrest portion, wherein the at least one haptic transducer is disposed on the backrest portion. In such vehicle seats, the at least one haptic transducer may comprise: a first set of at least one haptic transducer disposed along a central, longitudinal, axis of the backrest portion; and a second set of at least one haptic transducer disposed in a position laterally offset from the central, longitudinal, axis of the backrest portion. Preferably, each seat may comprise four haptic transducers, two of which are in the first set and two of which are in the second set. However, each seat may comprise three haptic transducers where one of which is in the first set and the remaining two are in the second set.

The at least one haptic transducer of the first set may be positioned so as to vibrate a spinal region of the user of the vehicle haptic system, in use, and wherein the at least one haptic transducer of the second set may be positioned so as to vibrate a kidney region of the user of the vehicle haptic system, in use.

The vehicle audio system may comprise a plurality of vehicle seats, each seat comprising at least one haptic transducer. Optionally, the control system may be configured to individually drive a haptic signal to each vehicle seat . Such an arrangement may conveniently allow each vehicle occupant to configure the amount of bass response they wish to experience. For example, one vehicle occupant may request "more bass" than other occupants. The other occupants may then just receive woofer/sub-woofer bass audio whereas the first occupant gets an additional bass experience from the transducers in their seat.

The control system may be configured to deactivate the at least one haptic transducer within a vehicle seat in the event the vehicle seat is unoccupied. Conveniently, the vehicle may comprise an occupancy sensor system, e.g. vehicle weight sensors in each seat, to determine if the seats are occupied/unoccupied.

Optionally, the at least one haptic transducer may be coupled to a foam mount. For example, the at least one haptic transducer may be coupled to a Poron^{®} foam mount. Such a mounting arrangement conveniently enables the impulse imparted by the haptic transducer to be spread out over a larger area.

The control system may comprise one or more controllers collectively comprising at least one electronic processor having an electrical input for receiving an input signal; and at least one memory device electrically coupled to the at least one electronic processor and having instructions stored therein; and wherein the at least one electronic processor is configured to access the at least one memory device and execute the instructions thereon so as to: cause the at least one audio speaker to convert the speaker audio signal to sound waves, to cause the at least one haptic transducer to vibrate according to the haptic signal and cause the at least one electrostatic panel loudspeaker to convert the panel audio signal to sound waves.

According to a still further aspect of the present invention there is provided a vehicle comprising the audio system or the vehicle audio system according to the above two aspects of the present invention.

Within the scope of this application it is expressly intended that the various aspects, embodiments, examples and alternatives set out in the preceding paragraphs, in the claims and/or in the following description and drawings, and in particular the individual features thereof, may be taken independently or in any combination. That is, all embodiments and/or features of any embodiment can be combined in any way and/or combination, unless such features are incompatible. The applicant reserves the right to change any originally filed claim or file any new claim accordingly, including the right to amend any originally filed claim to depend from and/or incorporate any feature of any other claim although not originally claimed in that manner.

### BRIEF DESCRIPTION OF THE DRAWINGS

One or more embodiments of the invention will now be described, by way of example only, with reference to the accompanying drawings, in which:
Figure 1 shows a known vehicle audio system;
Figure 2a shows vehicle audio system in accordance with embodiments of the present invention;
Figure 2b shows a schematic representation of the vehicle audio system of Figure 2a;
Figure 3 shows the control system and audio sub-system of the vehicle audio system shown in Figures 2a and 2b;
Figure 4 shows the control system and electrostatic panel sub-system of the vehicle audio system shown in Figures 2a and 2b;
Figure 5 shows the control system and haptic sub-system of the vehicle audio system shown in Figures 2a and 2b; and
Figure 6 shows a vehicle seat in accordance with an embodiments of the invention.

### DETAILED DESCRIPTION

Embodiments of the present invention are described below in relation to use within a vehicle. It is noted however that the audio system according to embodiments of the present invention may be deployed in other environments, e.g. with a home, cinema or other locations.

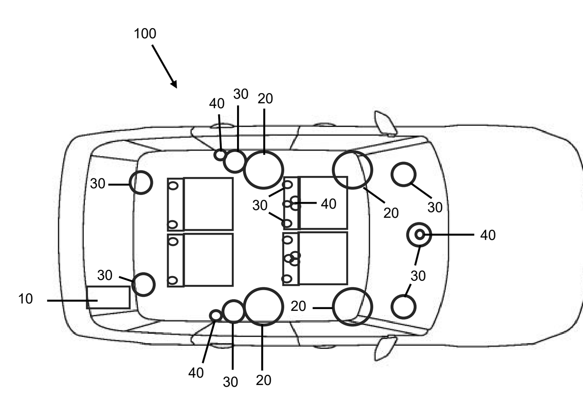

A vehicle 100 with a known vehicle audio system is shown in Figure 1. The vehicle comprises a number of different audio speaker types including: sub-woofer 10, woofer 20, mid-range speakers 30 and tweeters 40. It is noted that in some vehicle models there may be over 30 different speakers which are controlled by a multichannel amplifier of close to 30 different channels. In alternative vehicle configurations there may be a number of additional, smaller amplifiers distributed throughout the vehicle that are used to control the various audio speakers.

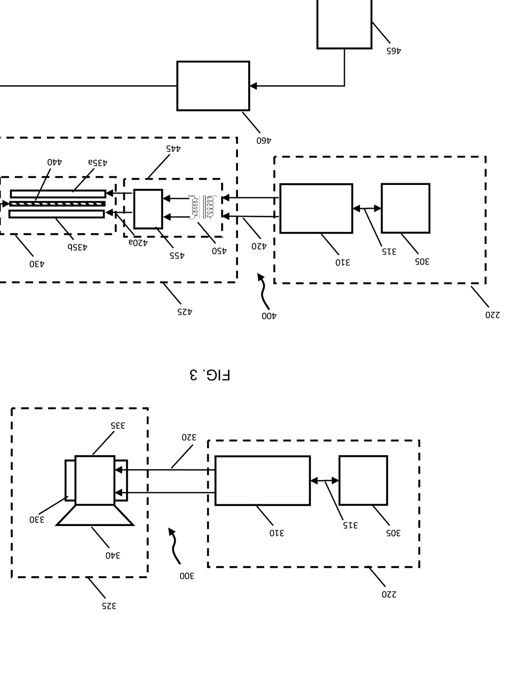

Driving such a number of speakers within an existing vehicle is a complex and power intensive process. Additionally, traditional speakers require certain space requirements to be met in order to house the components of the speaker (e.g. the magnet, coil and cone structures described below in relation to Figure 3). In environments such as a seat headrest (note: head rests may also be referred to as seat head restraints) it may be challenging to mount all the required speakers within the vehicle structure. It is noted that front seats may contain five or more speakers. In Figure 1 each front seat comprises multiple tweeter and mid-range speakers.

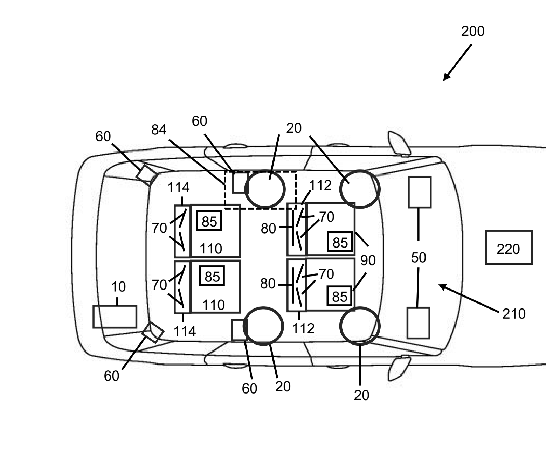

A vehicle 200 in accordance with an embodiment of the present invention is described herein with reference to the accompanying Figure 2a. The vehicle 200 comprises a vehicle audio system 210 including a control system 220 for controlling the audio output of the speakers (10, 20, 50, 60, 70, 80) within the vehicle audio system 210. The audio output of the speakers is output to the interior compartment 202 of the vehicle 200.

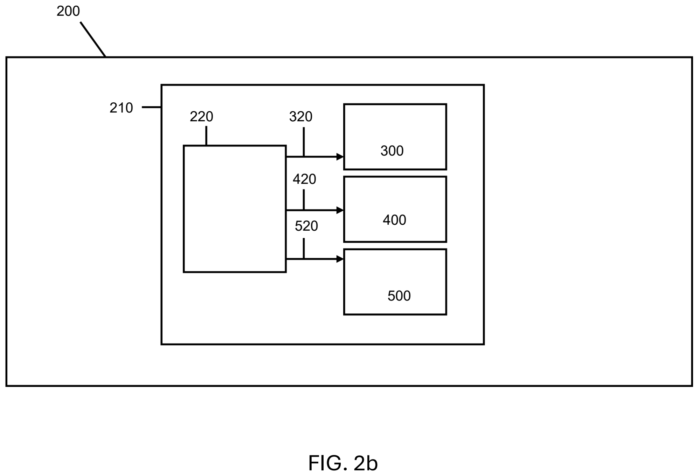

Similarly to Figure 1, the vehicle audio system 210 of Figure 2a comprises a sub-woofer 10 and woofers 20. However, the mid-range and tweeter speakers of Figure 1 have been replaced with a number of electrostatic panel loudspeakers (50, 60, 70, 80). As shown in Figure 2, the electrostatic panel loudspeakers are of different sizes depending on their location in the vehicle.

In the configuration shown in Figure 2a, there are two larger electrostatic panel loudspeakers 50 at the front of the vehicle. These loudspeakers 50 may have a large frequency range, e.g. 125 Hz to 50 kHz. It is noted that the electrostatic loudspeaker panels 50 may have a frequency range far beyond human auditory levels such that the impact of harmonic distortions is minimised.

Smaller electrostatic panel loudspeakers 60 may be located at the rear of the vehicle and headrest mounted electrostatic panel loudspeakers (70, 80) may be located within the headrests 112 of the vehicle front seats 90 and the headrests 114 of the vehicle rear seats 110.

In the configuration shown in Figure 2a the rear seats 110 have two electrostatic panel loudspeakers 70 in the vehicle seat headrests 114 that direct sound forwards within the vehicle.

The headrests 112 of the front seats 90 have three electrostatic panel loudspeakers (70, 80). There are two electrostatic panel loudspeakers 70 that direct sound forwards in the vehicle and a further electrostatic loudspeaker 80 that directs sound rearwards in the vehicle towards the rear seats 110.

The electrostatic panel loudspeakers (50, 60, 70, 80) may be retrofitted to vehicles in locations that were previously occupied by traditional mid-range and tweeter audio speakers.

Electrostatic panel loudspeakers are slimmer than traditional audio speaker, e.g., they may be only 5mm in depth. Such panel loudspeakers may also therefore be located in interior trim components 84, behind material trims and may also be formed into curved and other shapes such that they can be located in more locations within the vehicle cabin.

Electrostatic panel loudspeakers have a low mass diaphragm which requires a lower amount of energy to move compared to traditional audio speakers and which stops moving more quickly once the power is turned off. This may be contrasted to traditional audio speakers where the speaker cone may continue to move after power is turned off due to the cone's higher momentum compared to the panel loudspeaker diaphragm.

Electrostatic panel loudspeakers therefore generally require lower power levels to run and provide a sharper audio experience compared to traditional speakers.

The vehicle seats (90, 110) each further comprise one or more haptic transducers 85 for generating a vibration according to a haptic signal. A haptic transducer, which also may be referred to as a "tactile transducer" or a "bass shaker", is a device which generates low bass frequencies that can be felt. Haptic transducers can be compared to a traditional audio speaker in which the diaphragm is missing.

The haptic transducers 85 are used to complement the bass response of the vehicle 200 that is generated by the woofer 20 and sub-woofer 10 speakers.

Figure 2b shows a simplified representation of the vehicle 200 and the vehicle audio system 210 of Figure 2a in which the control system 220 outputs a speaker audio signal 320 to an audio speaker sub-system 300, a panel audio signal 420 to a panel sub-system 400 and a haptic signal 520 to a haptic transducer sub-system 500.

In order to better understand the implementation context and advantages of the vehicle audio system 210 of the present invention, a description of an audio speaker sub-system 300 (comprising a typical woofer 20 or sub-woofer 10 audio speaker which the electrostatic panel loudspeaker (50, 60, 70, 80) is intended to be used alongside) in accordance with embodiments of the present invention is provided with reference to Figure 3. Like features between Figure 3 and Figures 1, 2a and 2b are denoted by like reference numerals.

Figure 3 shows the control system 220 of Figure 2a/2b connected to an audio speaker sub-system 300.

The control system 220 is further shown to comprise a vehicle audio source 305 connected to an audio amplifier 310 via a digital bus 315. The audio amplifier 310 amplifies the incoming signal from the audio source 305 and is configured to output a relatively low-voltage speaker audio signal 320 to the audio speaker sub-system 300. For clarity reasons a single audio speaker 325 is shown in Figure 3 though it is to be appreciated that the vehicle 200 may comprise multiple audio speakers 325 in the form of one of more sub-woofer audio speakers 10 or woofer audio speakers 20. The audio signal lies in a frequency range known typically as 'bass-range' for audio speakers, and is typically between around 20 Hz to 200 Hz (for woofer systems) and 20 Hz up to 80 Hz for sub-woofer systems.

The audio speaker 325 provides audio transducer functionality: the audio signal 320 that is output by the audio amplifier 310 is transmitted to the audio speaker 325, which is configured to convert the incoming audio signal 320 into sound waves. More specifically, the audio speaker 325 comprises a magnet 330 and a cylindrical coil 335 of wire located between the poles of the magnet 330. The incoming audio signal 320 is transmitted through the coil 335 in alternating directions, causing the coil to move reciprocally (back and forth) between the poles of the magnet 330, based on Faraday's law. The audio speaker 325 further comprises a speaker cone 340 that is attached to one end of the coil 335 and is therefore also driven reciprocally in time with the movements of the coil 335. As the speaker cone 340 moves, it generates pressure waves in the surrounding air which propagate and are detected by a listener as sound waves.

As noted above, the audio speaker sub-system 300 in accordance with embodiments of the present invention comprises either a woofer 20 or subwoofer 10 as the audio speaker 125.

The present Applicant has appreciated that other types of transducers exist which can generate sound waves and hence function as speakers. For example, electrostatic transducers may be used in a speaker system to generate audio waves in addition to the audio speaker 325 described above. As the technically skilled person would be aware, electrostatic transducers in their most general sense are designed to generate sound via a force exerted on a membrane (or diaphragm) that is suspended in an electrostatic field. In more detail, electrostatic transducers typically comprise a membrane (e.g., a flexible sheet coated in an electrically conductive material) that is sandwiched between two electrically conductive stators (or grids), leaving a small air gap on either side of the membrane. The incoming audio signal is used to drive the stators, resulting in the generation of an electrostatic field proportional to the audio signal between the stators. The membrane is charged and held at a high voltage relative to the stators. A force is thus exerted upon the membrane causing it to move, driving the air on either side of the membrane to generate pressure waves (sound waves).

The present Applicant has appreciated that there are multiple benefits associated with the use of electrostatic transducers (e.g., improved audio response and sound quality obtained, improved versatility of implementation), and that it would be useful to combine the vehicle audio sub-system 300 described above (comprising one or more audio speakers 325) for bass response with an electrostatic speaker system for mid-range and high-frequency ranges.

An electrostatic loudspeaker panel in accordance with embodiments of the present invention is now described with reference to Figure 4. Like features between Figure 4 and Figures 1, 2a, 2b and 3 are denoted by like reference numerals.

Figure 4 shows the control system 220 of Figures 2a/2b connected to an electrostatic panel loudspeaker sub-system 400.

As also shown in Figure 3, the control system 220 comprises the vehicle audio source 305 connected to the audio amplifier 310 via the digital bus 315. As shown in Figure 4, the audio amplifier 310 is also configured to amplify the incoming signal from the audio source 305 and output a relatively low-voltage panel audio signal 420 to the electrostatic panel loudspeaker sub-system 400. For clarity reasons a single electrostatic panel loudspeaker 425 is shown in Figure 4 though it is to be appreciated that the vehicle 200 may comprise multiple panel speakers 425 in a variety of locations within the vehicle as shown in Figure 2a.

It is noted that the electrostatic panel loudspeaker 425 shown in Figure 4 corresponds to the electrostatic panel loudspeakers (50, 60, 70, 80) shown in Figure 2.

It is further noted that the components audio source 305, audio amplifier 310 and digital bus 315 are the same as described previously with reference to Figure 3. The output panel audio signal 420 corresponds to the audio signal 320 output in Figure 3, the speaker audio signal 320 being directed to the audio speaker 325 and the panel audio signal 420 being directed to an electrostatic panel loudspeaker 425.

The electrostatic loudspeaker sub-system 400 comprises the electrostatic panel loudspeaker 425 which provides transducer functionality. Specifically, the electrostatic panel loudspeaker 425 comprises an electrostatic transducer 430 that is configured to convert the panel audio signal 420 that is output by the audio amplifier 310 into sound waves. In more detail, the electrostatic transducer 430 comprises a pair of stators 435a, 435b and a membrane 440 that is located between the pair of stators 435a, 435b. The stators 435a, 435b are configured to receive an incoming audio signal 320 and generate an electrostatic field; and the membrane 440 is configured to move within the electrostatic field and create sound waves.

Additionally, the electrostatic panel loudspeaker 425 further comprises a voltage conversion module 445 that is configured to receive the panel audio signal 420 output by the audio amplifier 310, and to convert this input signal (which as previously mentioned corresponds to a relatively low-voltage speaker level signal) into a relatively high-voltage audio signal 420a that can be used by the stators 435a, 435b to generate an electrostatic field of sufficient strength to move the membrane 440.

In order to perform its functionality, the voltage conversion module 445 comprises at least one audio transformer 450 (i.e., a transformer that is of audio quality) that is configured to 'step-up' the voltage of the incoming audio signal 420 to a predefined voltage level that is suitable for operating the electrostatic transducer 430 (and specifically the stators 435a, 435b) in the desired manner. This predefined voltage value is typically of the order of several hundred V (for example, between around 500 V to 700 V etc.); in particular instances it is between around 550 and 650 V, and more particularly is around 600 V. The transformer 450 that is used in the voltage conversion module 445 may correspond to any suitable transformer that is of audio-quality and capable of providing the necessary step-up functionality for the audio signals. In one specific example, the transformer 450 may be implemented as a toroidal transformer. Advantages associated with the use of such a transformer - such as high efficiency and small size - render it particularly suitable for use in the context of the electrostatic panel loudspeaker 425.

Advantageously, the use of an audio transformer in the voltage conversion module 445 to provide the desired step-up of voltage for the signal utilises a simple and straightforward solution that optimises the desired outcome, whilst minimising the additional number of electronics components that are required to be installed. As such, the physical size of the voltage conversion module 445 is minimised overall, which is useful as this module needs to be installed in close physical proximity to the electrostatic transducer 430 in order to provide the necessary functionality. As a result, the voltage conversion module 445 can be combined with the electrostatic transducer 430 without unduly increasing the size of the electrostatic panel loudspeaker 425 as a whole. This is particularly advantageous when replacing speaker systems installed in locations within vehicles where space may be limited.

Additional electronic (processing) components may also be provided as part of the electrostatic panel loudspeaker 425, such as smoothing components 455 that are configured to perform signal smoothing on the stepped-up signal prior to its input to the electrostatic transducer 430. Although these smoothing components are shown in Figure 4 as forming part of the voltage conversion module 445, they may instead be provided as a separate module entirely.

As noted previously, for an electrostatic transducer to be operated correctly, the membrane that is located between the stators needs to be charged to a high potential (voltage). As such, the vehicle audio system 210 further comprises a high voltage module 460 that is configured to provide the necessary high voltage power to charge the membrane 440 in the electrostatic transducer 430. The high voltage module 460 is, in essence, a small voltage conversion module (box) that can convert an input low voltage (12V) to a significantly higher output voltage. The high voltage module 460 can be installed in a variety of different locations within the vehicle having an appropriately sized space, for example in the loadspace area. The appropriate level of power that this high voltage module 460 provides is typically in the order of several thousand Volts (for example, between around 2 kV and 5 kV etc.); in particular instances it is between 2.5 kV and 4kV, more particularly between 2kV and 3kV, and still more particularly is around 3 kV.

A power source 465, for providing the appropriate power to the high voltage module 460, also forms part of the vehicle audio system 400. This power source 465 may correspond to the standard (vehicle) battery that is used to power other components of the vehicle in which the audio system 400 is to be installed. As a result, the vehicle audio system 400 can seamlessly integrate (and be retrofit) into the existing vehicle systems despite the differing requirements in power and signal strength of the electrostatic speaker system 425 relative to the standard audio system 325.

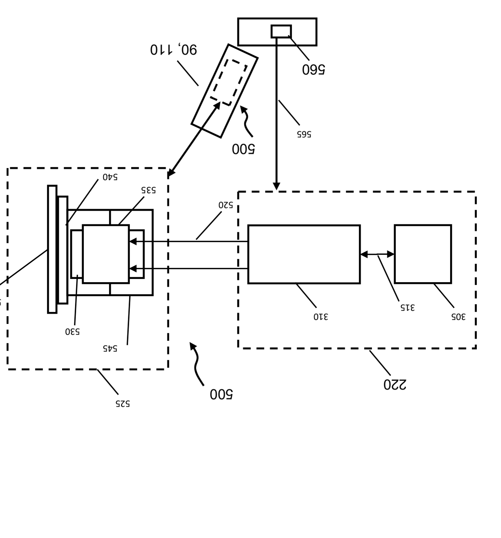

Figure 5 shows the control system 220 of Figures 2a/2b connected to haptic transducer sub-system 500.

As also shown in Figures 3 and 4, the control system 220 comprises the vehicle audio source 305 connected to the audio amplifier 310 via the digital bus 315. As shown in Figure 5, the audio amplifier 310 is also configured to amplify the incoming signal from the audio source 305 and output a haptic signal 520 to the haptic transducer sub-system 500. For clarity reasons a single haptic transducer 525 is shown in Figure 5 though it is to be appreciated that the vehicle 200 may comprise multiple haptic transducers 525 in a variety of locations within the vehicle as shown in Figure 2a.

It is noted that the haptic transducer 525 shown in Figure 5 corresponds to the haptic transducers 85 shown in Figure 2a.

It is further noted that the components audio source 305, audio amplifier 310 and digital bus 315 are the same as described previously with reference to Figures 3 and 4. The output haptic signal 520 corresponds to the audio signal 320 output in Figure 3 and the panel audio signal 420 output in Figure 4, the speaker audio signal 320 being directed to the audio speaker 325, the panel audio signal 420 being directed to an electrostatic panel loudspeaker 425 and the haptic signal being directed to a haptic transducer 525.

The haptic transducer 525 provides haptic transducer functionality: the haptic signal 520 that is output by the audio amplifier 310 is transmitted to the haptic transducer 525, which is configured to convert the incoming haptic signal 520 into vibrations. More specifically, the haptic transducer 525 comprises a magnet 530 and a cylindrical coil 535 of wire located between the poles of the magnet 530. The transducer 525 comprises a base 540 and the magnet 530 and wire coil 535 are located within a cover 545. The base 540 is affixed to a vibro-tactile foam membrane 550.

The incoming haptic signal 520 is transmitted through the coil 535 in alternating directions causing the magnet 530 to move reciprocally back and forth within the cover 545. Vibrations generated by the movement of the magnet 530 are transmitted through the base 540. The vibro-tactile membrane 550 causes the vibrations to be spread out across the foam membrane rather than acting as a point source of vibration.

The haptic transducer 525 of Figure 5 is located within one of the seats (90, 110) within the vehicle 200. The seats (90, 100) comprise a sensor 560 which is configured to output a seat sensor signal 565 to the control system 220 to indicate whether the seat is occupied or not.

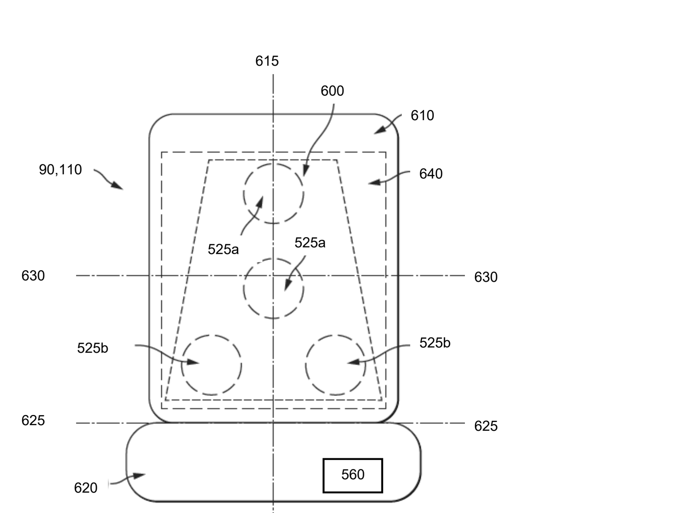

Referring to Figure 6, the vehicle seat 90, 110 includes a backrest portion 610 for supporting an occupant of the vehicle seat, and more specifically for supporting the back of an occupant. The occupant may be a driver of the vehicle 200, or a passenger of the vehicle 200. The vehicle seat 90, 110 includes a base portion 620 for further supporting the buttocks and legs of the occupant. The base portion 620 is joined to the backrest portion 610 at approximately a 90-degree angle in Figure 6, however, this angle may be configurable by the occupant.

Haptic transducers 525a, 5255b are disposed on, or disposed within, the backrest portion 110 of the vehicle seat 90, 110.

In this seat of Figure 6, the seat includes at least two sets of haptic transducers - a first set of at least one haptic transducer 525a and a second set of at least one haptic transducer 525b. In the illustrated seat, each of the first set and the second set includes two haptic transducers. However, seat may be configured in alternative configurations, for example the first set and the second set of haptic transducers 525a, 525b may include one, three or more haptic transducers.

The backrest portion 610 includes a central, longitudinal, axis 615, which splits or bisects the backrest portion 610 into two substantially equal longitudinal sections - a first section and a second section. The first section may be laterally offset from the central, longitudinal, axis 615 in a first direction, and the second section may be laterally offset from the central, longitudinal, axis 615 in a second direction, opposite to the first direction.

The haptic transducers 525a of the first set are disposed along the central, longitudinal, axis 615 of the backrest 610. The haptic transducers 525a may be disposed in any location along the central, longitudinal, axis 615 of the backrest portion 610. For example, the first set may include a first haptic transducer 525a disposed in an upper section of the backrest portion 510 and a second haptic transducer 525a disposed in a lower section of the backrest portion 610, with both haptic transducers 525a being disposed along the central, longitudinal, axis 615.

When an occupant is sat in the vehicle seat, the central, longitudinal, axis 615 of the backrest portion 610 aligns with a spinal region of the occupant. Positioning haptic transducers 525a in this way is advantageous, in that the spinal region of an occupant is particularly sensitive to vibrations. As such, the occupant's perception of bass frequencies emitted by the haptic transducers 525a of the first set is maximised.

The haptic transducers 525b of the second set are each disposed in a position laterally offset from the central, longitudinal, axis 615 of the backrest portion 610. As used herein, a position laterally offset of the central, longitudinal, axis 615 of the backrest portion 610 refers to position offset in a direction substantially left or right of the central, longitudinal, axis 615. In the illustrated example, the haptic transducers 525b of the second set are disposed on either side (i.e., left and right) of the central, longitudinal, axis 615. The backrest portion 610 further includes a base 625, and a transverse axis 630. The base 625 of the backrest portion 610 is located at the point of intersection between the backrest portion 610 and the base portion 620. The transverse axis 630 bisects the backrest portion 610 into a substantially upper section and a lower section. In seat shown in Figure 6, the haptic transducers 525b of the second set are disposed in the lower section of the backrest portion 610. With this position, the at least one haptic transducers 525b of the second set are positioned so to vibrate a kidney region of an occupant of the at least one vehicle seat 90, 100 in use. Positioning haptic transducers 525b in this way is advantageous in that the kidney regions of an occupant are particularly sensitive to vibrations. As such, the occupant's perception of bass frequencies emitted by the haptic transducers 525b of the second set is maximised.

The control system 220 may be configured to independently control the haptic transducers 525a of the first set and the haptic transducers 525b of the second set. That is, separate haptic signals 520 can be sent to the transducers of each set. Further, the control system 220 may be configured to pass separate haptic signals to haptic transducers within each set.

The haptic transducers 525a, 525b may be mounted within a frame 600 with a vibro-acoustic material 640 that allows vibrations to be spread out throughout the backrest portion 610 rather than being point sources of vibration.

In the embodiment of the present invention described above in relation to Figures 2a, 2b, 3 to 6, the control system 220 may be configured to operate in different modes of operation depending on the audio environment within the vehicle 200.

For example, since there will be overlap between the operational frequencies of the audio speakers (10, 20, 325) and the haptic transducers (85, 525), the control system 220 may be configured to reduce the power to the audio speakers in order to mitigate the effects of distortion in the output of the audio speakers. It is noted that the operational frequencies of the audio speakers (in the form of sub-woofers or woofers) and electrostatic panel loudspeakers may not fully cross over. The haptic transducers may be used to provide a more cohesive audio experience by bridging that operation frequency gap. Additionally, since the haptic transducers extend into the bass range they can be used to reduce the power needed at the audio speakers to obtain the required bass performance within the vehicle.

Additionally, it is noted that providing bass audio from the combination of both the audio speakers and the haptic transducers enables a perceived boost in audio output of around 3-6dB. This results in a boost to the bass performance without needing to boost power to the audio speakers which could cause distortion effects to occur.

A vehicle would be expected to be configured such that either all seats comprise a haptic transducer or the front seats comprise a haptic transducer. Each seat that has a haptic transducer additionally comprises a sensor 560 that outputs a signal 565 to the control system 220 indicating whether the seat is occupied. The control system 220 may therefore be configured to only output haptic signals 520 to seats which are occupied, i.e. the control system is configured to individually drive a haptic signal 520 to each seat that is equipped with a haptic transducer (85, 525).

In a further mode of operation the control system may be configured such that the haptic transducer is enabled for one occupied seat but not for other occupied seats. In this way a general bass audio experience is provided throughout the interior compartment 202 of the vehicle but one occupant can have an enhanced bass experience via the haptic transducer in their seat.

It will be appreciated that various changes and modifications can be made to the present invention without departing from the scope of the present application.

## Claims

1. An audio system comprising:
at least one audio speaker for converting a speaker audio signal to sound waves;
at least one haptic transducer for generating a vibration according to a haptic signal;
at least one electrostatic panel loudspeaker for converting a panel audio signal to sound waves;
a control system in communication with the at least one audio speaker, the at least one haptic transducer and the at least one electrostatic panel loudspeaker, and configured to cause the at least one audio speaker to convert the speaker audio signal to sound waves, to cause the at least one haptic transducer to vibrate according to the haptic signal and cause the at least one electrostatic panel loudspeaker to convert the panel audio signal to sound waves.

2. An audio system as claimed in Claim 1, wherein the at least one audio speaker comprises a woofer speaker or a sub-woofer speaker.

3. An audio system as claimed in any preceding claim, wherein the panel audio signal comprises a frequency range from 125Hz to 50kHz, the speaker audio signal comprises a frequency range up to 120Hz and the haptic signal comprises the frequency range 20 Hz to 300 Hz.

4. An audio system as claimed in any preceding claim, wherein the control system is configured to reduce power to the at least one audio speaker and increase power to the at least one haptic transducer in order to mitigate the effects of distortion in the output from the at least one audio speaker.

5. A vehicle audio system for outputting audio to an interior compartment of a vehicle comprising an audio system according to any preceding claim.

6. A vehicle audio system as claimed in Claim 5, comprising at least one vehicle seat comprising a headrest portion, wherein the at least one electrostatic loudspeaker comprises a headrest electrostatic loudspeaker unit disposed in the headrest portion.

7. A vehicle audio system according to Claim 6, comprising a plurality of vehicle seats, each vehicle seat comprising a headrest portion wherein each headrest portion comprises an electrostatic loudspeaker unit.

8. A vehicle audio system according to Claim 7, wherein the or each headrest electrostatic loudspeaker unit comprises a pair of electrostatic loudspeaker panels, each panel of the pair being located either side of the headrest portion, or the or each headrest electrostatic loudspeaker unit comprises a wraparound panel located within the headrest portion.

9. A vehicle audio system according to any one of Claims 5 to 8, wherein the at least one haptic transducer comprises a plurality of haptic transducers disposed in a footrest or floor portion of the vehicle and disposed in vehicle seats.

10. A vehicle audio system according to any one of Claims 5 to 9, comprising at least one vehicle seat comprising a backrest portion, wherein the at least one haptic transducer is disposed on the backrest portion.

11. A vehicle audio system according to Claim 10, wherein the at least one haptic transducer comprises:
a first set of at least one haptic transducer disposed along a central, longitudinal, axis of the backrest portion; and
a second set of at least one haptic transducer disposed in a position laterally offset from the central, longitudinal, axis of the backrest portion.

12. A vehicle audio system as claimed in any one of Claims 5 to 11, comprising a plurality of vehicle seats, each seat comprising at least one haptic transducer and wherein the control system is configured to individually drive a haptic signal to each vehicle seat.

13. A vehicle audio system as claimed in Claim 12, wherein the control system is configured to deactivate the at least one haptic transducer within a vehicle seat in the event the vehicle seat is unoccupied.

14. A vehicle audio system as claimed in any one of Claims 5 to 13, wherein the at least one haptic transducer is coupled to a foam mount.

15. A vehicle comprising the audio system according to any one of Claims 1 to 4 or the vehicle audio system according to any one of Claims 5 to 14.
